# EUROPÄISCHE PATENTSCHRIFT

(11) **EP 0 868 887 B1**
(45) Veröffentlichungstag und Bekanntmachung des Hinweises auf die Patenterteilung: **06.04.2005**
(21) Anmeldenummer: 98100478.1
(22) Anmeldetag: 13.01.1998
(51) Int. Cl.: A61C 3/03

(54) **Werkzeug zur spanabhebenden Präparation einer seitlichen Kavität in einem Zahn**
Cutting tool for preparing a side cavity in a tooth
Outil de coupe destiné à la préparation d'une cavité latérale d'une dent

(30) Priorität: 14.01.1997 DE 19700998; 20.08.1997 DE 19736239
(43) Veröffentlichungstag der Anmeldung: 07.10.1998
(73) Patentinhaber: Kaltenbach & Voigt GmbH & Co. KG, 88400 Biberach/Riss (DE)
(72) Erfinder: Hugo, Burkhard, Dr., 97265 Hettstadt (DE); Mössle, Walter, 88441 Mittelbiberach (DE)
(74) Vertreter: Schmidt-Evers, Jürgen, Dipl.-Ing.

(56) Entgegenhaltungen:
- WO-A-96/14024

## Beschreibung

Die Erfindung bezieht sich auf ein Werkzeug nach dem Oberbegriff des Anspruchs 1 oder 3.

Ein Werkzeug dieser Art ist in der WO 96/14024 beschrieben. Es handelt sich um ein Werkzeug, dessen abrasiver Bearbeitungsabschnitt seitlich und stirnseitig wirksam und geeignet ist, bei oszillierendem Antrieb im Sinne einer Vibration, die dem Werkzeug durch ein dentales Handstück übertragen wird, eine seitliche Kavität im Zahn auszuarbeiten. Bei dieser bekannten Ausgestaltung ist der Bearbeitungsabschnitt ein Bearbeitungskopf, der bezüglich des Werkzeugschaftes verdickt ist und dessen Querschnittsform zu seinem freien Ende hin konvergiert. Auf der dem seitlichen Bearbeitungsabschnitt gegenüberliegenden Seite weist das Werkzeug eine glatte Fläche auf. Hierdurch ist das bekannte Werkzeug geeignet, eine Kavität im approximalen Bereich des Zahns einzuarbeiten. Bei diesem Einarbeitungsvorgang wird der Bearbeitungsabschnitt vorzugsweise von okklusal nach zervikal eingesenkt. Dabei kann die Kavität durch ein Rotationswerkzeug bereits vorgearbeitet sein, oder sie kann auch mit dem Bearbeitungsabschnitt ohne Vorarbeitung ausgearbeitet werden. Hierbei bleibt der benachbarte Zahn unbeeinträchtigt, da die dem Bearbeitungsabschnitt gegenüberliegende glatte Fläche den benachbarten Zahn nicht beschädigt. Die Abrasivität der wirksamen Arbeitsflächen des Bearbeitungsabschnitts wird durch einen Besatz von aneinanderliegenden kleinen Körnern aus hartem Material, vorzugsweise aus Diamant, geschaffen. Im Funktionsbetrieb erweisen sich die kleinen harten Körner als eine Vielzahl von Schneiden, wobei die jeweils vorhandenen Arbeitsflächen im wesentlichen ganzflächig wirksam sind.

Die Amplituden der Oszillationsbewegungen des Bearbeitungsabschnitts im Funktionsbetrieb können durch räumliche kreisförmige oder ellipsenförmige Bewegungen im Sinne der Vibration ausgeführt werden. Um beim Herausziehen des Werkzeugs aus der Kavität ein Klemmen zu vermeiden, weist der Bearbeitungsabschnitt eine zu seinem freien Ende hin konvergente Querschnittsform auf.

Es hat sich in der Praxis gezeigt, daß der Kantenbereich zwischen der Mantelfläche eines Zahns und den in die Mantelfläche auslaufenden Flächen einer Kavität empfindlich ist und zum Ausbrechen neigt. Dies führt man darauf zurück, daß der Zahnschmelz eine Prismenstruktur hat, wobei die Prismen von denkbaren Strahlen begrenzt sind, die vom Zahnzentrum ausgehen. Der Zahn läßt sich dabei als ein abgestumpftes Ei oder eine abgestumpfte Kugel vorstellen, daß bzw. die im Zahnfleisch versenkt angeordnet ist.

Zur Vermeidung des Ausbrechens des Zahnschmelzes im Bereich der Kante zwischen der Kavität und der Mantelfläche des Zahns ist bereits vorgeschlagen worden, den Kantenbereich durch die Anbringung einer Fase zu brechen und diese Fase bei der Präparation des Zahns mit der Füllung auszufüllen. Bei der Verwendung eines Inlays ist bereits vorgeschlagen worden, am Inlay Kantenansätze anzuformen, die die Fasen ausfüllen oder die Seitenflächen und Bodenfläche der Kavität so zu formen, daß ein gewünschter Randwinkel entsteht.

Das vorbeschriebene bekannte Werkzeug weist zu beiden Seiten einer in der Längsrichtung seines Bearbeitungskörpers verlaufenden Längsmittelebene zwei Kantenvorsprünge auf, an denen jeweils eine Fasenbearbeitungfläche zur Ausarbeitung der Fasen an der Randkante der Kavität angeordnet sind.

Der Erfindung liegt die Aufgabe zugrunde, ein vorliegendes Werkzeug so auszugestalten, daß eine vorteilhafte Form der Wände oder der Kantenfasen der Kavität handhabungsfreundlich präparierbar sind.

Diese Aufgabe wird durch die Merkmale des Anspruchs 1 gelöst.

Die erfindungsgemäβe Ausgestaltung weist der Vorteil auf, daß die längs verlaufenden Bearbeitungsflächen eine Form aufweisen, die unter Berücksichtigung einer mittleren Zahnform und einer mittleren Breite und Divergenz der Seitenwände der Kavität einen günstigen Flächenverlauf der abrasiv abgearbeiteten Fläche ermöglicht. Dabei kann das Werkzeug zur Bearbeitung der Kantenfasen oder zur Bearbeitung der Randbereiche der Flächen der Kavität benutzt werden. Außerdem führt die erfindungsgemäße Ausgestaltung zu einem günstigen Verlauf der die Außenfläche des Zahns schneidenen Kanten der Kantenfasen oder der Randbereiche der Flächen der Kavität, wobei sich sowohl für ein Füllungsmaterial verhältnismäßig geringer Bruchfestigkeit wie Keramik oder Kunststoff um ein metallisches Füllungsmaterial größerer Festigkeit, insbesondere Goldguß, günstige Randwinkel ergeben, die auch zu einem kleinen Spalt am fertig präparierten Zahn führen. Die vorgenannten Vorteile lassen sich bei einer einfachen und handhabungsfreundlichen manuellen Führung des Werkzeugs bei der Bearbeitung erreichen. Außerdem läßt sich die Bearbeitung mit einem erfindungsgemäßen Werkzeug mit geringem zeitaufwand durchführen. Ferner begünstigt die erfindungsgemäße Ausgestaltung eine Präparation verbesserter Qualität

Bei der erfindungsgemäßen Ausgestaltung kann ein für die Ausarbeitung der eigentlichen Kavität bestimmter Werkzeugvorsprung entfallen, wie er bei der bekannten Ausgestaltung vorhanden ist.

In den Unteransprüchen sind Merkmale enthalten, die die Form der auszuarbeitenden Fasen weiter verbessern, zur Stabilität im Kantenbereich der Kavität beitragen und zu einer einfachen und kostengünstig herstellbaren Bauform für das Werkzeug führen. Ferner wird ermöglicht, daß ein und dasselbe Werkzeug sowohl im approximalen Bereich eines Zahns oder in seinen Seitenbereichen verwendet werden kann.

Nachfolgend werden die Erfindung und weitere durch sie erzielbare Vorteile anhand von bevorzugten Ausführungsbeispielen und Zeichnungen näher erläutert. Es zeigt
- Fig. 1: ein erfindungsgemäßes Werkzeug mit einem seitlichen Bearbeitungsabschnitt an einem dentalen Handstück in der Seitenansicht;
- Fig. 1a: das Werkzeug mit einem dentalen Handstuck in abgewandelter Ausgestaltung;
- Fig. 2: das Werkzeug in der Stirnansicht;
- Fig. 2a: Schnitt III-III in Fig. 2;
- Fig. 3: ein Werkzeug mit einem Bearbeitungsabschnitt in abgewandelter Ausgestaltung in der Seitenansicht und in vergrößerter Darstellung;
- Fig. 4: das Werkzeug mit Blickrichtung auf einen seitlichen Bearbeitungsabschnitt in vergrößerter Darstellung;
- Fig. 5: der Bearbeitungsabschnitt in der Stirnansicht;
- Fig. 6: das Werkzeug mit Blickrichtung auf einen seitlichen Bearbeitungsabschnitt in abgewandelter Ausgestaltung und vergrößerter Darstellung;
- Fig. 7: den Bearbeitungsabschnitt nach Fig. 6 in der Stirnansicht;
- Fig. 8: das Werkzeug in abgewandelter Ausgestaltung in der Seitenansicht;
- Fig. 9: das Werkzeug nach Fig. 8 mit Blickrichtung auf den seitlichen Bearbeitungsabschnitt mit besonderen Maßangaben und in vergrößerter Darstellung;
- Fig. 10: das Werkzeug in der Blickrichtung auf einen seitlichen Bearbeitungsabschnitt in abgewandelter Ausgestaltung und vergrößerter Darstellung;
- Fig. 11: den Bearbeitungsabschnitt nach Fig. 10 in der Stirnansicht;
- Fig. 12: das Werkzeug mit Blickrichtung auf einen seitlichen Bearbeitungsabschnitt in abgewandelter Ausgestaltung;
- Fig. 13: der Bearbeitungsabschnitt nach Fig 12 in der Stirnansicht:
- Fig. 14: einen Unterkieferzahn mit einer seitlichen oder approximalen Kavität in perspektivischer Darstellung;
- Fig. 15: einen Unterkieferzahn mit einer seitlichen oder approximalen Kavität abgewandelter Ausgestaltung in perspektivischer Darstellung.

Das Werkzeug 1 weist einen Werkzeugschaft 2 auf, der in seinem dem Werkzeug 1 abgewandten und somit hinteren Endbereich wenigstens ein Verbindungselement 3 für eine lösbare Verbindung mit einem dentalen Handstück 4 aufweist, und der an seinem vorderen Ende lösbar oder unlösbar mit einem Bearbeitungskörper 14 verbunden ist, der einen seitlichen Bearbeitungsabschnitt 5 aufweist, dessen Bearbeitungsflächen abrasiv sind, vorzugsweise mit einer Vielzahl harten Körnern, z.B. Diamantkörnern, belegt sind, wie es an sich bekannt ist. Der Werkzeugschaft 2 weist vorzugsweise eine runde Querschnittsform auf, wobei er sich zum Bearbeitungsabschnitt 5 hin kontinuierlich oder konisch verjüngen kann. Die Längsmittelachsen 11a, 11b des Werkzeugschaftes 2 und des Bearbeitungskörpers 14 erstrecken sich vorzugsweise koaxial oder axparallel. Der Bearbeitungskörper 14 weist eine quer zu seiner Längsmittelachse 11b gerichtete Dicke a auf, die etwa gleich oder etwas größer ist als die zugehörige Querschnittsabmessung des Werkzeugschaftes 2 und etwa 2,5 mm beträgt. Die sich quer zur Dicke erstreckende Breite b des Bearbeitungskörpers 14 ist vorzugsweise größer als die zugehörige Querschnittsabmessung des Werkzeugschaftes 2 und beträgt etwa 4 bis 5 mm. Der Bearbeitungskörper 14 ist somit ein gegenüber dem Werkzeugschaft 2 verdickter Bearbeitungskopf. Die Länge L des Bearbeitungskörpers 14, die sich in der Längsrichtung der Längsmittelachse 11b erstreckt, beträgt etwa 7 bis 8 mm.

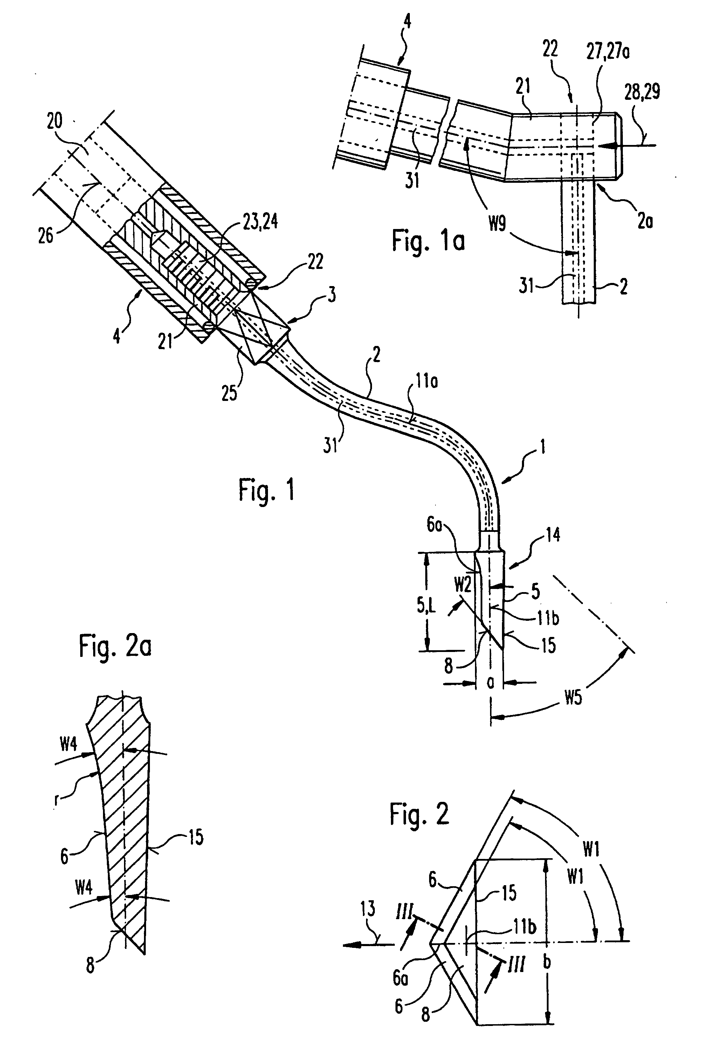

Die wesentlichen Arbeitsflächen des seitlichen Bearbeitungsabschnitts 5 sind zwei Bearbeitungsflächen 6, die sich zu beiden Seiten einer Längsmittelebene 7 des Werkzeugschaftes 2 und des Bearbeitungskörpers 14 befinden, die sich in der Längsmittelachse 11b erstreckt. Die Bearbeitungsflächen 6 erstrecken sich in der Querebene gem. Fig. 2 gesehen gerade, wobei sie mit der Längsmittelebene 7 jeweils einen Winkel W1 von etwa 35 bis 70°, insbesondere etwa 45 bis 60° einschließen. Die Querschnittsform des Bearbeitungskörpers 14 ist trapezförmig

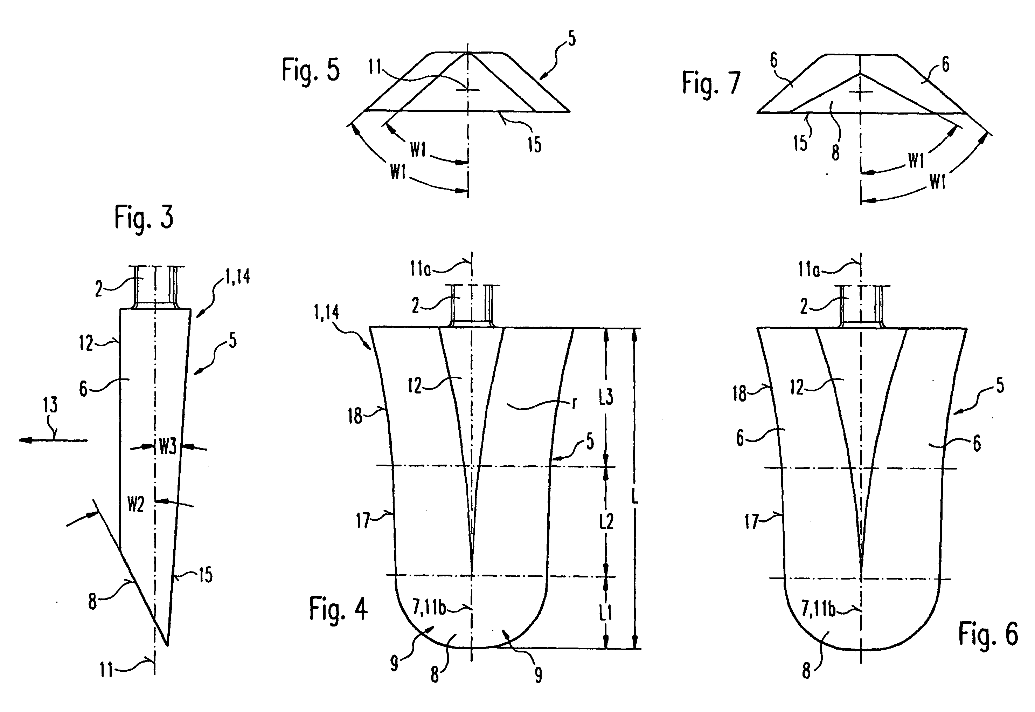

Der Bearbeitungsabschnitt 5 weist an seinem freien Ende eine dritte, sich quer zur Längsmittelachse 11b erstreckende Bearbeitungsfläche 8 auf, die sich in der parallel zur Breite b erstreckenden Querrichtung konvex gekrümmt oder über einen Teil b1 der Breite b gerade erstreckt und im Bereich von seitlichen Rundungen 9 in die seitlichen Bearbeitungsflächen 6 übergeht. Der Winkel W2, den die Bearbeitungsfläche 8 mit der geraden Längsmittelachse 11b einschließt, ist ein spitzer Winkel, und er beträgt vorzugsweise etwa 30 bis 60°, insbesondere etwa 45°. Die Bearbeitungsflächen 6, 8 sind im vorbeschriebenen Sinne abrasiv ausgebildet. Desweiteren kann eine bei einem etwas breiteren Bearbeitungskörpers 14 gemäß Fig. 4 und 5 zwischen den Bearbeitungsflächen 6 befindliche breitseitige Seitenfläche 12 entsprechend abrasiv oder glatt ausgebildet sein. Die Seitenfläche 12 kann sich parallel zur Längsmittelachse 11b erstrecken oder geringfügig zum freien Ende hin geneigt sein. Bei der vorliegenden Ausgestaltung ist die Seitenfläche 12 eine ebene Fläche. Der Bearbeitungsabschnitt 5 ist somit auf einer Breitseite des Bearbeitungskörpers 14 angeordnet und durch die Bearbeitungsflächen 6 und 8 und gegebenenfalls auch die Seitenfläche 12 gebildet. Seine Hauptachse oder Haupt-Wirkrichtung gemäß Pfeil 13 erstreckt sich in der Längsmittelebene 7 und etwa rechtwinklig zur Längsmittelachse 11b.

Auf der der Haupt- Wirkrichtung 13 entgegengesetzten Seite weist der Bearbeitungskörper 14 eine glatte Fläche 15 auf, die bei der vorliegenden Ausgestaltung eine ebene Fläche ist und die sich bezüglich der Längsmittelachse 11b parallel (Fig. 1) oder zum freien Ende des Bearbeitungskörpers 14 hin geneigt (Fig. 3) erstrecken kann, wobei sie mit der Längsmittelachse 11b einen spitzen Winkel W3 von etwa 2 bis 10°, insbesondere etwa 4° einschließen kann.

Wie insbesondere aus den Fig. 2a, 4 bis 7, 9 und 10 bis 13 zu entnehmen ist, divergieren die sich an einen ersten durch die die Bearbeitungsfläche 8 gebildeten Längsbereich L1 anschließenden Bearbeitungsflächen 6 in die dem freien Ende des Bearbeitungskörpers 14 abgewandte Längsrichtung, wobei sie in einem zweiten, mit L2 bezeichneten Längsbereich eine gleichmäßige Divergenz 17 aufweisen und in einem sich daran anschließenden, mit L3 bezeichneten Längsbereich eine progressive Divergenz 18 aufweisen. Im Bereich der gleichmäßige Divergenz 17 schließen die sich gerade erstreckenden Bearbeitungsflächen 6 einen spitzen Winkel W4 (Fig. 2a) von insbesondere etwa 3 bis 6° mit der Längsmittelachse 11b ein. Im Bereich der progressiven Divergenz 18, in dem der zwischen den Bearbeitungsflächen 6 und der Längsmittelachse 11b eingeschlossene Winkel 4 größer ist, können sich die Bearbeitungsflächen 6 gerade oder konkav bzw. gekrümmt erstrecken. Bei der vorliegenden Ausgestaltung beträgt der Radius r dieser Krümmung, an die sich die Bearbeitungsflächen 6 im Bereich der gleichmäßigen Divergenz 17 tangential anschließen, etwa 17 mm. Die progressive Divergenz 18 kann auch durch eine lineare Divergenz größeren Neigungswinkels gebildet sein. Wenn die Bearbeitungsflächen 6 einander durchdringen (keine Seitenfläche 12 in Fig. 2), dann ergibt sich eine bezüglich der Längsmittelachse 11b bzw. der glatten Fläche 15 zum Werkzeugschaft 2 hin divergierende, konkave Durchdringungskante 6a.

Zur Benutzung des Werkzeugs 1 wird dieses durch das Verbindungselement 3 mit einem Antriebsschaft 21 des stabförmigen Handstücks 4 verbunden, in dem ein angedeuteter Schwingungserzeuger bzw. Vibrator 20 wahlweise ein- und ausschaltbar angeordnet ist, der im Funktionsbetrieb den Antriebsschaft 21 und somit auch das Werkzeug 1 in Vibration versetzt. Die Amplituden der Schwingung oder Vibration können im wesentlichen quer oder auch längs der Längsmittelachse 26 des Handstücks gerichtet sein, wobei sie rundförmige oder elliptische flächige oder auch räumliche Bewegungen des Bearbeitungskörpers 14 hervorrufen können. Die Frequenz befindet sich vorzugsweise im Schall- oder Ultraschallbereich.

Das Verbindungselement 3 ist Teil einer Verbindungsvorrichtung 22, die beim Ausführungsbeispiel nach Fig. 1 durch eine Schraubverbindung mit einem am Fußende des Werkzeugschaftes 2 angeordneten Gewindezapfens 23 gebildet ist, der in eine axiale Gewindebohrung 24 des Antriebs-Werkzeugschaftes 21 einschraubbar ist. Für einen Werkzeugangriff ist im Fußbereich des Werkzeugschaftes 2 ein Schlüsselangriffselement, hier ein Sechskant 25, angeordnet.

Bei der Ausgestaltung nach Fig. 1 ist der freie Endbereich des Werkzeugschaftes 2 bezüglich der Längsmittelachse 26 des Handstücks 4 um einen spitzen Winkel W5 schräg angeordnet, wobei der Bearbeitungskörpers 14 seitlich neben der Längsmittelachse 26 angeordnet ist und somit von dieser einen seitlichen Abstand aufweist. Hierzu ist der Werkzeugschaft 2 entsprechend gebogen. Vorzugsweise ist der Werkzeugschaft 2 in seinem mittleren Bereich zunächst zu der dem Bearbeitungsabschnitt 5 abgewandten Seite hin gekrümmt und dann über die Längsmittelachse 26 hinaus zur dem Bearbeitungsabschnitt 5 zugewandten Seite gekrümmt, vorzugsweise gebogen. Der Winkel W5 beträgt vorzugsweise etwa 30 bis 60° insbesondere etwa 45°.

Dabei ist der Bearbeitungsabschnitt 5 so angeordnet, daß seine Hauptrichtung (Pfeil 13) dem Handstück 4 zugewandt oder abgewandt ist. Diese Anordnung eignet sich für den vorderen oder hinteren Bereich eines zu bearbeitenden Zahnes. Aufgrund des Vorhandenseins der glatten Fläche 15 eignet sich das Werkzeug 1 auch im approximalen Bereich eines Zahns, ohne daß der benachbarte Zahn aufgrund der Werkzeug-Oszillation wesentlich beschädigt wird.

Für den Gebrauch im innenseitigen oder außenseitigen Zahnbereich ist der Bearbeitungsabschnitt 5 so um 90° verdreht am Werkzeugschaft 2 angeordnet, daß seine Ausrichtung gemäß Pfeil 13 quer zur die Abwinklung enthaltende Längsebene des Werkzeugschaftes 2 gerichtet ist und zwar zur einen oder zur anderen Seite hin (nicht dargestellt). Es ist vorteilhaft, dem Handstück 4 mehrere Werkzeuge 1 zuzuordnen, die sich in ihrer Form und/oder Größe und/oder Abtragsfähigkeit, z.B. fein, grob oder fein, mittel und grob, voneinander unterscheiden können oder sich voneinander dadurch unterscheiden, daß wenigstens ein für den vorderen Bereich, wenigstens ein für den hinteren Bereich, wenigstens ein für den innenseitigen und/oder ein für den außenseitigen Bereich des zu bearbeitenden Zahns eingerichtet ist. Entsprechend verdreht ist jeweils der Bearbeitungsabschnitt 5 angeordnet.

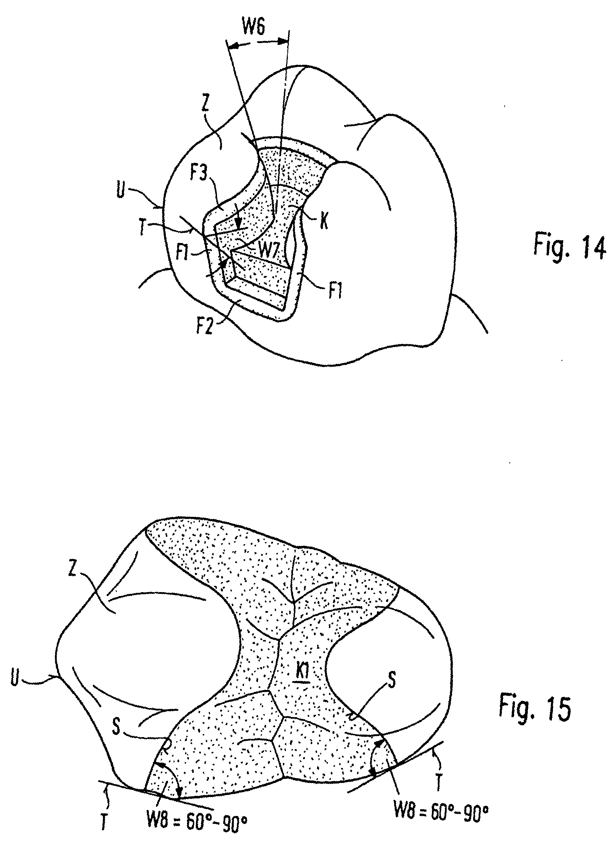

In Fig. 14 ist ein Zahn Z mit einer okklusalen Kavität K dargestellt, die seitlich oder approximal aus dem Zahn Z ausmündet. Zur Stabilisierung des Zahnschmelzes sind die Kanten der Kavität K durch eine Fase gebrochen. Die Fasen im aufrecht verlaufenden Kantenbereich sind mit F1, die im Bereich des Kavitätgrundes verlaufende Fase ist mit F2 und die im okklusalen Kantenbereich vorhandene Fase ist mit F3 bezeichnet. Die Kavität K kann mit einem rotierenden Werkzeug vollständig ausgearbeitet oder nur vorgearbeitet und mit einem vibrierend angetriebenen abrasiven Werkzeug der in der eingangs angegebenen Druckschrift beschriebenen Art ausgearbeitet sein. Die Seitenwände der Kavität K schließen mit der vertikalen ein Winkel W6 von etwa 3 bis 10°, insbesondere etwa 6° ein.

Das vorliegende Werkzeug 1 dient dazu, die Fasen F1, F2 im Kantenbereich zwischen den Flächen der Kavität K und der Umfangsfläche U des Zahns Z auszuarbeiten. Die Breite b des Bearbeitungsabschnitts 5 oder Bearbeitungskörpers 14 kann größer oder kleiner sein als die Breite der Kavität K. Für Kavitäten K größerer Breitenabmessungen ist es vorteilhaft, mehrere Werkzeuge 1 unterschiedlicher Breiten b austauschbar vorliegen zu haben, so daß sie wahlweise benutzt werden können. Bei einer Breite b, die größer ist als die Breite der Kavität K kann der Bearbeitungskörper 14 im approximalen Bereich des Zahns Z von okklusal nach zervikal eingesenkt werden, wobei beim Einsenken zunächst die Fasen F1 und am Ende der Einsenkbewegung auch die Fase F2 ausgearbeitet werden. Dabei erhalten die Fasen F1, F2 die durch die Form der Bearbeitungsflächen 6, 8 vorgegebene Form. Sofern Nacharbeitungen dieser Form gewünscht sind, kann dies durch eine erneute Bearbeitung der Fase in eine entsprechend gekippten Stellung des Werkzeugs 1 erfolgen. Wenn die Breite b kleiner ist als die Breite der Kavität K, dann kann der Bearbeitungskörper 14 in dem durch die Kavität K vorgegebenen Freiraum von okklusal nach zervikal eingesenkt werden, wobei bereits dabei die Fase F2 wenigstens teilweise ausgearbeitet wird und durch seitliche Bewegungen des Bearbeitungskörpers 14 die Fase F2 vervollständigt und die Fasen F1 ausgearbeitet werden können.

Aufgrund der progressiven Divergenz 18 der Bearbeitungsflächen 6 erhalten diese eine Form, die dem Kantenverlauf der aufrechten Kanten der Kavität K entspricht oder nahekommt. Die Größe der Divergenz entspricht vorzugsweise einem Mittelwert der Form der Zähne unter Berücksichtigung der Divergenz der Winkel W6 oder sie ist entsprechend angenähert. Hierdurch eignet sich das Werkzeug 1 für alle Zähne, wobei ein an den Mittelwert angepaßter oder angenäherter Fasenverlauf errreicht wird. Es läßt sich somit eine Fase F1 etwa gleicher Breite und etwa gleichen Fasenwinkels W7 erreichen, der von der Fase F1 und einer Zahntangente T eingeschlossen wird, s. Fig. 14.

Bei der Präparierung eines Zahns mit einer sogenannte Metall- oder Guß-Füllung, insbesondere Goldguß-Füllung ergeben sich zwei einander entgegengesetzte Forderungen. Zum einen ist eine Fase aus Festigkeitsgründen des Zahnschmelzes im Kantenbereich erforderlich. Zum anderen ergibt die Ausarbeitung einer Fase einen Zahnmaterial-Abtrag, was aus Gründen der Zahnerhaltung unerwünscht ist. Des weiteren ergibt eine Fase eine Vergrößerung des Spaltes zwischen einem Inlay und der Wandung der Kavität K, weil der Spalt von der Außenfläche des Zahns schräg geschnitten wird. Dies ist unerwünscht, weil insbesondere im okklusalnahen Bereich ein das Inlay sichernder Zement beim Vorhandensein eines vergrößerten Spaltes eher angreifbar ist und schneller abgenutzt wird, was unerwünscht ist.

Die Ausgestaltung nach Fig. 2, 4 und 5, bei der der Winkel W1 über die Längen L1, L2 gleichbleibend etwa 45 bis 60° beträgt, führt bezüglich der vorgenannten Forderungen zu einem vorteilhaften Kompromiß. Dies ist dadurch begründet, daß bei dieser Form der Bearbeitungsflächen 6 der sich unter Berücksichtigung der Neigungswinkel W6 am Zahn Z in Wirklichkeit ergebende Fasenwinkel W7 zwischen der Fasenfläche und der Umfangstangente T am Zahn Z im okklusalen Bereich größer ist als im zervikalen Bereich, wobei sich eine geringer Spalt der Fase F1 ergibt und die an der Außenwand des Zahns Z reale Spaltbreite gering ist.. Hierdurch wird sowohl der Forderung nach dem Vorhandensein einer Fase F1 unter Berücksichtigung eines erforderlichen Kantenbruches als auch der Forderung nach einem möglichst kleinen Spalt Rechnung getragen. Die Ausgestaltung nach Fig. 4 und 5 eignet sich deshalb insbesondere für Goldguß-Füllungen.

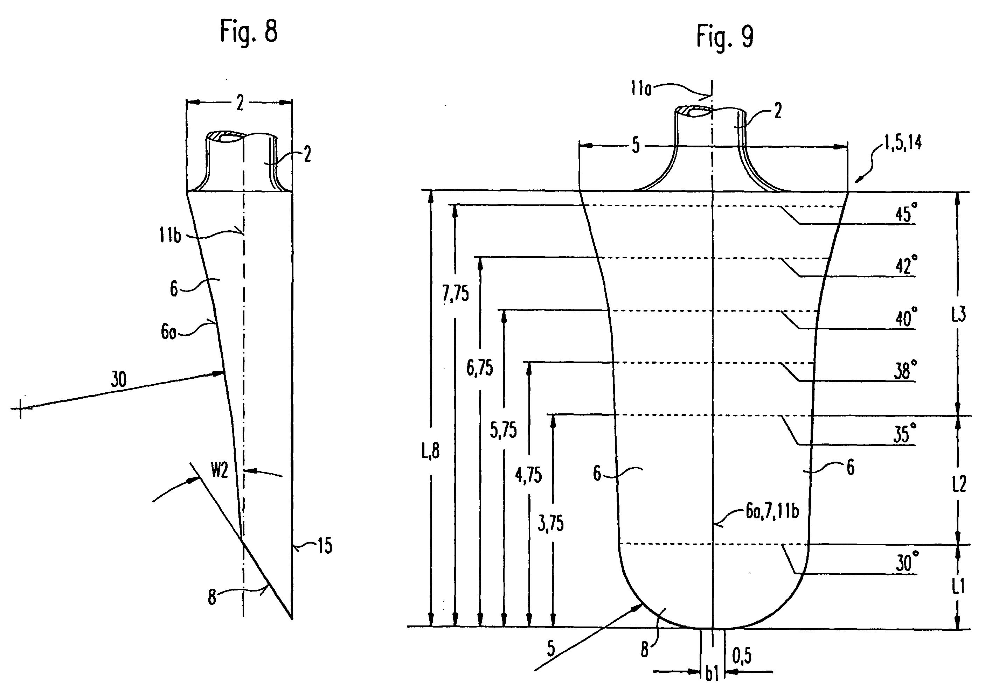

Die Ausgestaltung nach den Fig. 6 und 7, bei der gleiche oder vergleichbare Teile mit gleichen Bezugszeichen bezeichnet sind, unterscheidet sich vom vorbeschriebenen Ausführungsbeispiel dadurch, daß der Winkel W1 von zervikal nach okklusal gleichmäßig oder progressiv kleiner wird. Hierdurch wird der am Zahn Z vorhandene Fasenwinkel W7 noch größer, wodurch sich die an der Außenfläche des Zahns reale Breite des Spaltes in angestrebter Weise noch mehr verringert.

Auch das Maß dieser Winkelveränderung ist nach einem Mittelwert der üblichen zu behandelnden Zahn- und Kavitätenformen und Kavitätenbreiten bestimmt. Bei der vorliegenden Ausgestaltung beträgt der Winkel W1 zervikal etwa 60° und okklusal etwa 45°.

Die Ausgestaltungen nach Fig. 4 bis 7 eignen sich deshalb insbesondere für Goldguß-Füllungen

Die Fig. 8 und 9 zeigen einen Bearbeitungskörper 14 und Bearbeitungsabschnitt 5 der Ausgestaltung nach Fig. 6 und 7 in der Seitenansicht sowie in vergrößerter Darstellung, wobei in bestimmten Abständen vom freien Ende des Bearbeitungsabschnitts 5 die sich jeweils ergebenden Winkel W1 angegeben sind. Dabei können die beiden Bearbeitungsflächen 6 sich an einer gemeinsamen konkav gekrümmten Kante 6a schneiden oder sie können eine Seitenfläche 12 gemäß Fig. 6 und 7 schneiden.

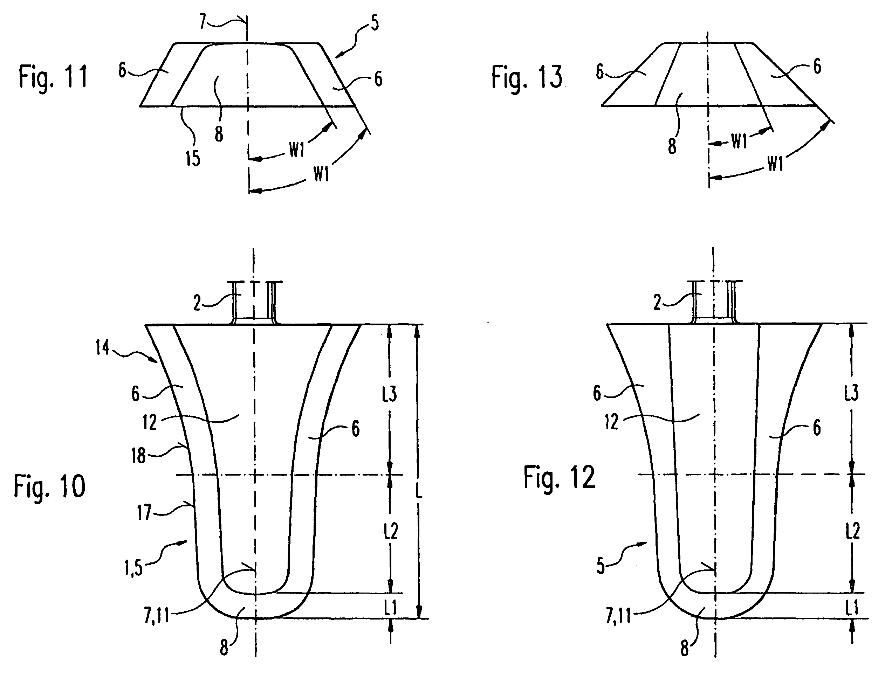

Ein wesentlicher Unterschied des Ausführungsbeispiels nach Fig. 10 und 11 bezüglich. des Ausführungsbeispiels nach Fig. 4 und 5 besteht darin, daß der Winkel W1 kleiner bemessen ist und etwa 20 bis 40°, insbesondere etwa 30° beträgt. Diese Werkzeugausgestaltung eignet sich zur Ausarbeitung einer Kavität K1, Fig. 15 für eine Füllung mit einem Keramik- oder Komposit-Material bzw. Kunststoffmaterial, insbesondere bei der Verwendung von entsprechenden Inlays oder Onlays und zwar aus folgenden Gründen. Bei der Präparation einer Kavität K1 für ein Füllmaterial, das weniger fest oder belastbar ist als eine Metallfüllung, wie es bei Keramik und Kunststoff der Fall ist, ist es Vorteilhaft, die Kavität K1 ohne eine Fase zu präparieren und dabei die wenigstens die Randbereiche der Seitenwände der Kavität K1 mit den Bearbeitungsflächen 6 mit einem Winkel W8 zu formen, der mit einer an der Außenfläche des Zahns Z angelegten Tangente T begrenzt ist und sich von zervikal nach okklusal linear oder progressiv vergrößert. Bei dieser Ausgestaltung kommt eine Fase in Fortfall.

Die Werkzeugausgestaltungen nach den Fig. 10 bis 13 eignen sich vorzüglich zur Ausarbeitung bzw. Nachbearbeitung einer solchen Kavität K1, wobei mit den Bearbeitungsflächen 6 die Seitenwände S der Kavität K1 wenigstens im äußeren Randbereich präpariert und somit geformt werden. Bei dieser Ausgestaltung des Bearbeitungskörpers 14 bzw. Bearbeitungsabschnitts 5 wird der Bearbeitungskörper 14 in die Kavität K eingeführt, so daß die Bearbeitungsflächen 6 die Seitenwände S bearbeiten können. Theoretisch kann die Breite b des Bearbeitungskörpers 14 so an die gewünschte Breite der Kavität K1 angepaßt sein, daß der Bearbeitungsabschnitt 5 spanabhebend von der Seite oder im approximalen Bereich von okklusal her spanabhebend in die Kavität eingeführt werden kann, oder die Breite b kann auch geringer bemessen sein, so daß die Seitenwände S durch Bewegungen des Bearbeitungskörpers hin und her bearbeitet werden können. Dabei kann die Bearbeitungsfläche 8 zur Ausarbeitung einer Fase am Grund der Kavität K1 vorhanden sein oder nicht.

Die Werkzeugausgestaltung nach Fig. 10 und 11, wobei der der Winkel W1 gleich ist, jedoch der Winkel W4 (Fig 2a) sich von zervikal nach okklusal vergrößert, ergibt an den Seitenwänden S der Kavität K1 einen verhältnismäßig kleinen Winkel W8, was erwünscht ist, um ein Ausbrechen der Füllung oder des Inlays am Rand der Kavität zu vermeiden.

Aus den gleichen Gründen ist auch das Ausführungsbeispiel gemäß Fig. 12 und 13 vorteilhaft, bei dem der Winkel W1 sich von zervikal nach okklusal gleichmäßig oder progressiv vergrößert, z.B. von etwa 20 bis 40°, insbesondere etwa 3o°, auf etwa 35° bis 55°, insbesondere etwa 45°. Aufgrund dieser Winkeländerung ergibt sich unter Berücksichtigung der Breite und des Winkels W5 der Seitenwände S der Kavität K1 am Zahn Z ein etwa gleich großer Winkel W8 von zervikal nach okklusal.

Die freie Stirnfläche des Bearbeitungskörpers 14, die sich bei der vorliegenden Ausgestaltung unter einem spitzen Winkel W2 erstreckt und abrasiv ist, kann bezüglich der Mitelachse 11b etwa rechtwinklig verlaufen und in einem solchen Fall abrasiv oder gegebenenfalls auch glatt sein.

Bei den Ausgestaltungen des Werkzeugs 1 und des Handstücks 4 gemäß Fig. 1a bei denen gleiche oder vergleichbare Teile mit gleichen Bezugszeichen versehen sind, ist der sich gerade erstreckende Werkzeugschaft 2 mit einem prismatischen Werkzeugschaftendbereich 2a in einer Steckfassung 27 lösbar gehalten, die quer zum Antriebs-Werkzeugschaft 21 angeordnet ist und z.B. durch eine Querbohrung 27a gebildet sein kann. Dieser Antriebs-Werkzeugschaft 21 überragt ein Gehäuse oder eine Griffhülse des Handstücks 4 nach vorne, wobei der Antriebs-Werkzeugschaft 21 sich axial erstrecken kann oder etwas abgewinkelt sein kann, so daß der Werkzeugschaft 2 mit der Längsmittelachse 26 des Handstücks 4 einen stumpfen Winkel W9 von z.B. von etwa 100° einschließt. Zur Sicherung des Werkzeugschaftes 2 in der Steckfassung 27 ist eine kraft- oder formschlüssig wirksame Sicherungsvorrichtung 28 am Antriebs-Werkzeugschaft 21 angeordnet, die vereinfacht durch einen Pfeil 29 angedeutet ist und durch eine gegen den Werkzeugschaft 2 spannbare Klemmschraube gebildet sein kann.

Im Funktionsbetrieb führt der Bearbeitungskopf 14 kleine Schwingungen aus, so daß alle Arbeitsflächen des Bearbeitungsabschnitts in der Lage sind, abrasiv wirksam zu sein und das Zahnmaterial abzutragen. Beim vorliegenden Ausführungsbeispiel weist der Oszillationantrieb eine Bewegungsfrequenz von etwa 4 bis 8 kHz, insbesondere etwa 6 kHz, auf, wobei sich im Bereich des Bearbeitungsabschnitts 5 eine Amplitude von z.B. räumlichen Bewegungen von etwa 0,05 mm bis etwa 0,25 mm, insbesondere etwa 0,1 mm ergibt.

Der Bearbeitungsabschnitt 5 oder das Werkzeug 1 ist bezüglich der Längsmittelebene 7 spiegelsymmetrisch ausgebildet.

Es ist zwecks Kühlung der Behandlungsstelle und zwecks Spülung von Verunreinigungen oder Spänen vorteilhaft, der Behandlungsstelle im Funktionsbetrieb ein Kühl- oder Spülmittel, insbesondere Wasser, zuzufügen. Dies kann durch eine bezüglich des Handstücks 4 und des Werkzeugs 1 durch eine extern oder intern verlaufende Zuführungsleitung erfolgen. Bei der vorliegenden Ausgestaltung erstreckt sich eine Zuführungsleitung 31 axial durch den Antriebs-Werkzeugschaft 21, durch die Verbindungsvorrichtung 22, axial durch den Werkzeugschaft 2 bis in den Bereich des Bearbeitungsabschnitts 5, wo sie im Bereich wenigstens einer der Bearbeitungsflächen 6, 8 oder wenigstens einer anderen Fläche des Bearbeitungskopfes 14 ausmünden kann. Der Zuführungsleitung 31 ist ein nicht dargestelltes Absperrelement zum wahlweisen Öffnen und Schließen zugeordnet. Wenigstens eine Ausmündungsöffnung 32 für die Zuführungsleitung 31 kann auch oberhalb des Bearbeitungsabschnittes 5 im Werkzeugschaft 2 angeordnet sein, von der die Flüssigkeit aufgrund der Schwerkraft selbsttätig zur Behandlungsstelle strömt.

## Patentansprüche

1. Werkzeug (1) zur spanabhebenden Präparation einer seitlichen Kavität (K) in einem Zahn (Z), mit
einem Werkzeugschaft (2), dessen eines Ende mit einem dentalen Handstück (4) verbindbar ist und an dessen anderem Ende ein Bearbeitungskörper (14) angeordnet ist,
wobei der Bearbeitungskörper (14) zu beiden Seiten einer Längsmittelebene (7) seitliche Bearbeitungsflächen (6) aufweist, die jeweils einen spitzen Winkel (W1) mit der Längsmittelebene (7) einschliessen,
welche in Richtung auf den Werkzeugschaft (2) hin bezüglich einer in der Längsmittelebene (7) verlaufenden Längsmittelachse (11b) des Bearbeitungskörpers divergieren,
**dadurch gekennzeichnet,**
**dass** die Bearbeitungsflächen (6) wenigstens in einem an den Werkzeugschaft (2) angrenzenden Längsbereich (L3) des Werkzeugs (1) oder über die ganzen Länge (L) des Werkzeugs (1) hinweg eine progressive Divergenz (18) aufweisen, derart, dass in dem Bereich der progressiven Divergenz der von den Bearbeitungsflächen (6) mit der Längsmittelachse (11b) eingeschlossene Winkel (W4) an einer dem Werkzeugschaft (2) näher liegenden Stelle größer ist als an einer von dem Werkzeugschaft (2) entfernter liegenden Stelle.

2. Werkzeug nach Anspruch 1,
**dadurch gekennzeichnet,**
**dass** der Winkel (W1) wenigstens in dem an den Werkzeugschaft (2) angrenzenden Längsbereich (L3) der Bearbeitungsflächen (6) oder auf deren gesamter Länge (L) gleich gross ist.

3. Werkzeug nach Anspruch 1,
**dadurch gekennzeichnet,**
**dass** der Winkel (W1) wenigstens in dem an den Werkzeugschaft (2) angrenzenden Längsbereich (L3) der Bearbeitungsflächen (6) oder auf deren gesamter Länge (L) sich in der Richtung auf den Werkzeugschaft (2) hin vergrössert oder verkleinert.

4. Werkzeug nach Anspruch 3,
**dadurch gekennzeichnet,**
**dass** sich der Winkel (W1) stufenlos ändert.

5. Werkzeug nach einem der vorherigen Ansprüche,
**dadurch gekennzeichnet,**
**dass** sich die Divergenz (18) der Bearbeitungsflächen (6) und damit der von den Bearbeitungsflächen (6) mit der Längsmittelachse (11b) eingeschlossene Winkel (W4) im Bereich der progressiven Divergenz kontinuierlich vergrössert.

6. Werkzeug nach einem der vorherigen Ansprüche,
**dadurch gekennzeichnet,**
**dass** der Winkel (W1) etwa 30 bis 60° vorzugsweise etwa 30 bis 45° insbesondere etwa 45 bis 60° beträgt.

7. Werkzeug nach einem der vorherigen Ansprüche,
**dadurch gekennzeichnet,**
**dass** der Winkel (W1)in dem an den Werkzeugschaft (2) angrenzenden Längsbereich (L3) etwa 45° und in einem mittleren Längsbereich (L2), der zwischen dem an den Werkzeugschaft (2) angrenzenden Längsbereich (L3) und einem am gegenüberliegenden Ende des Werkzeugs befindlichen Werkzeugschaftfemen Längsbereich (L1) liegt, etwa 60° beträgt.

8. Werkzeug nach einem der vorherigen Ansprüche,
**dadurch gekennzeichnet,**
**dass** der Winkel (W1)in dem an den Werkzeugschaft (2) angrenzenden Längsbereich (L3) etwa 45° und in einem mittleren Längsbereich (L2), der zwischen dem an den Werkzeugschaft (2) angrenzenden Längsbereich (L3) und einem am gegenüberliegenden Ende des Werkzeugs befindlichen Werkzeugschaftfemen Längsbereich (L1) liegt, etwa 30° beträgt.

9. Werkzeug nach einem der vorherigen Ansprüche,
**dadurch gekennzeichnet,**
**dass** im dem an den Werkzeugschaft (2) angrenzenden Längsbereich (L3) gegenüberliegenden Werkzeugschaftfernen Längsbereich (L1) des Bearbeitungsabschnitts (5) eine in die längs verlaufenden Bearbeitungsflächen (6) vorzugsweise gerundet übergehende, quer verlaufende Fasenbearbeitungsfläche (8) angeordnet ist.

10. Werkzeug nach Anspruch 9,
**dadurch gekennzeichnet, dass** die Bearbeitungsfläche (8) mit der Längsmittelachse (11) des Bearbeitungsabschnitts (5) einen zum Werkzeugschaft (2) hin offenen spitzen Winkel von vorzugsweise etwa 30° einschliesst.

11. Werkzeug nach Anspruch 9 oder 10,
**dadurch gekennzeichnet,**
**dass** die Bearbeitungsfläche (8) sich in ihrem mittleren Querbereich (b1) in der Querrichtung gerade erstreckt.

12. Werkzeug nach einem der vorherigen Ansprüche,
**dadurch gekennzeichnet,**
**dass** die längs verlaufenden Bearbeitungsflächen (6) einander schneiden oder eine Seitenfläche (12) des Bearbeitungsabschnitts (5) schneiden.

13. Werkzeug nach einem der vorherigen Ansprüche,
**dadurch gekennzeichnet,**
**dass** es auf seiner den seitlichen Bearbeitungsflächen (6) gegenüberliegenden Seite eine glatte Fläche (15) aufweist.

14. Werkzeug nach Anspruch 13,
**dadurch gekennzeichnet,**
**dass** die glatte Fläche (15) achsparallel zur Längsmittelachse (11) oder zum freien Ende hin geneigt verläuft und/oder eben ist.

## Claims

1. Tool (1) for the preparation, with the removal of material, of a lateral cavity (K) in a tooth (Z), having
a tool shaft (2) of which one end can be connected with a dental handpiece (4) and at the other end of which a working body (14) is arranged,
wherein the working body (14) has to both sides of a longitudinal middle plane (7) lateral working surfaces (6) which each include an acute angle (W1) with the longitudinal middle plane (7),
which working surfaces, in a direction towards the tool shaft (2), diverge with respect to a longitudinal middle axis (11b), running in the middle plane (7), of the working body,
**characterized in that**,
the working surfaces (6) have, at least in a longitudinal region (L3) of the tool (1) adjacent the tool shaft (2), or over the entire length (L) of the tool (1), a progressive divergence (18) such that in the region of the progressive divergence the angle (W4) included by the working surfaces (6) with the longitudinal middle axis (11b) is greater at a position lying nearer the tool shaft (2) than at a position lying further from the tool shaft (2).

2. Tool according to claim 1,
**characterized in that**,
the angle (W1), at least in the longitudinal region (L3) of the working surfaces (6) adjacent the tool shaft (2), or over the entire length (L) of the working surfaces, is uniformly large.

3. Tool according to claim 1,
**characterized in that**,
the angle (W1), at least in the longitudinal region (L3) of the working surfaces (6) adjacent the tool shaft (2), or over the entire length (L) of the working surfaces, increases or decreases in the direction towards the tool shaft (2).

4. Tool according to claim 3,
**characterized in that**,
the angle (W1) changes in a step-less manner.

5. Tool according to any preceding claim,
**characterized in that**,
the divergence (18) of the working surfaces (6), and therewith the angle (W4) included by the working surfaces (6) with the longitudinal middle axis (11b) increases continuously in the region of the progressive divergence.

6. Tool according to any preceding claim,
**characterized in that**,
the angle (W1) is about 30 to 60°, preferably about 30 to 45°, in particular about 45 to 60°.

7. Tool according to any preceding claim,
**characterized in that**,
in the longitudinal region (L3) adjacent the tool shaft (2) the angle (W1) is about 45°, and in a middle longitudinal region (L2), lying between the longitudinal region (L3) adjacent the tool shaft (2) and a tool shaft distant longitudinal region (L1) located at the opposite end of the tool, is about 60°.

8. Tool according to any preceding claim,
**characterized in that**,
in the longitudinal region (L3) adjacent the tool shaft (2) the angle (W1) is about 45°, and in a middle longitudinal region (L2), lying between the longitudinal region (L3) adjacent the tool shaft (2) and a tool shaft distant longitudinal region (L1) located at the opposite end of the tool, is about 30°.

9. Tool according to any preceding claim,
**characterized in that**,
in the tool shaft distant longitudinal region (L1) of the working section (5) opposite to the longitudinal region (L3) adjacent the tool shaft (2) there is arranged a chamfer working surface (8) which develops transversely and transitions into the longitudinally developing working surfaces (6), preferably in a rounded manner.

10. Tool according to claim 9,
**characterized in that**,
the working surface (8) includes with the longitudinal middle axis (11) of the working section (5) an acute angle, open towards the tool shaft (2), of preferably about 30°.

11. Tool according to claim 9 or 10,
**characterized in that**,
the working surface (8) extends, in its middle transverse region (b1), in the transverse direction in a straight manner.

12. Tool according to any preceding claim,
**characterized in that**,
the working surfaces (6) extending longitudinally intersect one another or intersect a lateral surface (12) of the working section (5).

13. Tool according to any preceding claim,
**characterized in that**,
it has a smooth surface (15) on its side opposite to the lateral working surfaces (6).

14. Tool according to claim 13,
**characterized in that**,
the smooth surface (15) runs axis parallel to the longitudinal middle axis (11) or inclined towards the free end and/or is plane.

## Revendications

1. Outil (1) pour préparation par enlèvement de copeaux d'une cavité latérale (K) dans une dent (Z), avec
une tige d'outil (2) dont une extrémité peut être raccordée à une pièce à main dentaire (4) et à l'autre extrémité de laquelle est placé un corps d'usinage (14), et dans lequel le corps d'usinage (14) comporte des surfaces d'usinage (6) latérales des deux côtés d'un plan médian longitudinal (7), qui forment chacune un angle aigu (W1) par rapport au plan médian longitudinal (7), qui divergent dans la direction de la tige d'outil (2) par rapport à un axe médian longitudinal (11b) du corps d'usinage s'étendant dans le plan médian longitudinal (7),
**caractérisé en ce que**
les surfaces d'usinage (6) comportent une divergence (18) progressive au moins dans une zone longitudinale (L3) de l'outil (1) adjacente à la tige d'outil (2) ou sur toute la longueur (L) de l'outil (1) de manière à ce que, dans la zone de la divergence progressive, l'angle (W4) fourni par les surfaces d'usinage (6) avec l'axe médian longitudinal (11b) soit plus grand à un emplacement situé plus près de la tige d'outil (2) qu'à un emplacement situé plus loin de la tige d'outil (2).

2. Outil selon la revendication 1,
**caractérisé en ce que**
l'angle (W1) est de même valeur au moins dans la zone longitudinale (L3) des surfaces d'usinage (6) adjacente à la tige d'outil (2) ou sur toute leur longueur (L).

3. Outil selon la revendication 1,
**caractérisé en ce que**
l'angle (W1) augmente ou diminue dans la direction de la tige d'outil (2) au moins dans la zone longitudinale (L3) des surfaces d'usinage (6) adjacente à la tige d'outil (2) ou sur toute leur longueur (L).

4. Outil selon la revendication 3,
**caractérisé en ce que**
l'angle (W1) varie progressivement.

5. Outil selon l'une quelconque des revendications précédentes,
**caractérisé en ce que**
la divergence (18) des surfaces d'usinage (6) et donc de l'angle (W4) fourni par les surfaces d'usinage (6) avec l'axe médian longitudinal (11b) augmentent en continu dans la zone de la divergence progressive.

6. Outil selon l'une quelconque des revendications précédentes,
**caractérisé en ce que**
l'angle (W1) est d'environ 30° à 60°, de préférence d'environ 30° à 45°, en particulier d'environ 45° à 60°.

7. Outil selon l'une quelconque des revendications précédentes,
**caractérisé en ce que**
l'angle (W1) est d'environ 45° dans la zone longitudinale (L3) adjacente à la tige d'outil (2) et d'environ 60° dans une zone longitudinale médiane (L2) qui est située entre la zone longitudinale (L3) adjacente à la tige d'outil (2) et une zone longitudinale (L1) éloignée de la tige d'outil et située à l'extrémité opposée de l'outil.

8. Outil selon l'une quelconque des revendications précédentes,
**caractérisé en ce que**
l'angle (W1) est d'environ 45° dans la zone longitudinale (L3) adjacente à la tige d'outil (2) et d'environ 30° dans une zone longitudinale médiane (L2) qui est située entre la zone longitudinale (L3) adjacente à la tige d'outil (2) et une zone longitudinale (L1) éloignée de la tige d'outil et située à l'extrémité opposée de l'outil.

9. Outil selon l'une quelconque des revendications précédentes,
**caractérisé en ce que**
une surface d'usinage de facette (8) s'étendant transversalement, se prolongeant, de préférence arrondie par les surfaces d'usinage (6) s'étendant longitudinalement, est agencée dans la zone longitudinale (L1) du segment d'usinage (5) éloignée de la tige d'outil et opposée à la zone longitudinale (L3) adjacente à la tige d'outil (2).

10. Outil selon la revendication 9,
**caractérisé en ce que**
la surface d'usinage (8) forme avec l'axe médian longitudinal (11) du segment d'usinage (5) un angle aigu ouvert vers la tige d'outil (2), de préférence d'environ 30°.

11. Outil selon la revendication 9 ou 10,
**caractérisé en ce que**
la surface d'usinage (8) s'étend, dans sa zone transversale médiane (b1), en ligne droite dans la direction transversale.

12. Outil selon l'une quelconque des revendications précédentes,
**caractérisé en ce que**
les surfaces d'usinage (6) s'étendant longitudinalement se coupent mutuellement ou coupent une surface latérale (12) du segment d'usinage (5).

13. Outil selon l'une quelconque des revendications précédentes,
**caractérisé en ce que**,
sur son côté opposé aux surfaces d'usinage latérales (6), il comporte une surface lisse (15).

14. Outil selon la revendication 13,
**caractérisé en ce que**
la surface lisse (15) s'étend parallèlement à l'axe médian longitudinal (11) ou en pente vers l'extrémité libre et/ou est plane.
